# FASCICULE DE BREVET EUROPEEN

(11) **EP 1 492 311 B1**
(45) Date de publication et mention de la délivrance du brevet: **12.04.2006**
(21) Numéro de dépôt: 04291592.6
(22) Date de dépôt: 23.06.2004
(51) Int. Cl.: H04L 29/12

(54) **Traitment d'adresses de terminaux de communication, par integration et/ou extraction de caracteristiques d'interface de communications dans l'adresse**
Adressverarbeitung von Kommunikationsendgeräten durch Integration und/oder Extraktion von Kommunikationsschnittstellenmerkmalen in der Adresse
Processing of addresses of communication terminals by integration and/or extraction of interface communication features in the address

(30) Priorité: 27.06.2003 FR 0307774
(43) Date de publication de la demande: 29.12.2004
(73) Titulaire: ALCATEL, 75008 Paris (FR)
(72) Inventeur: Marce, Olivier, 91300 Massy (FR); Galand, Damien, 92370 Chaville (FR)
(74) Mandataire: Fournier, Michel Robert Marie

(56) Documents cités:
- WO-A-00/54477
- LEE D C ET AL: "THE NEXT GENERATION OF THE INTERNET: ASPECTS OF THE INTERNET PROTOCOL VERSION 6" IEEE NETWORK, IEEE INC. NEW YORK, US, vol. 12, no. 1, 1998, pages 28-33, XP000739805 ISSN: 0890-8044

## Description

L'invention concerne le domaine de la transmission de paquets de données entre terminaux de communication d'un réseau de communications à commutation de paquet et à protocole sans connexion.

On entend ici par « terminal de communication », un équipement de réseau capable d'échanger des données avec d'autres équipements de réseau, via des équipements de communication (ou noeuds) d'un réseau de communications, tels que des routeurs périphériques (ou « edge routers ») ou des routeurs de coeur (ou « core routers »), ou des commutateurs (ou « switchs »). Par conséquent, un terminal de communication pourra être un matériel, fixe ou mobile, comme par exemple un téléphone, un ordinateur ou un serveur.

Comme le sait l'homme de l'art, l'information nécessaire à la transmission de paquets de données au sein d'un réseau à commutation de paquet et à protocole sans connexion, par exemple un réseau à protocole IP, est l'adresse du terminal destinataire des paquets. Cette adresse est contenue dans le champ d'adresse de l'entête du paquet.

Une telle information permet certes de faire parvenir des paquets au niveau d'un terminal destinataire, mais il ne garantie pas que ces paquets pourront être traités correctement par ledit terminal destinataire. En effet, l'aptitude d'un terminal à traiter un paquet de données dépend notamment du type d'interface de communication à laquelle il est raccordé et qui lui permet de joindre des terminaux de communication, fixes ou mobiles, destinataires finaux des données contenues dans le paquet.

Par exemple, la taille des paquets de données que peut accepter une interface de communication dépend de son type. Cette taille, qui est définie par un paramètre appelé « unité de transmission maximum » (ou MTU pour « Maximum Transmission Unit »), est inconnue du terminal émetteur (ou source), si bien qu'il doit initialement transmettre ses paquets selon une MTU arbitraire. Or, si la taille du paquet reçu par le terminal destinataire est trop grande pour son interface de communication, celui-ci transmet à l'équipement ayant émis le paquet un message ICMP (Internet Control Message Protocol) lui demandant de retransmettre le paquet sous une forme fragmentée. Le terminal source ne connaissant toujours pas la taille MTU, il peut être obligé de renvoyer plusieurs fois les données à l'intérieur de paquets de tailles de plus en plus petites, jusqu'à ce qu'il trouve la taille MTU supportée par l'interface de communication du terminal destinataire. Ce type de traitement répétitif consomme inutilement des ressources et retarde la transmission des données. Il peut même, dans des situations extrêmes, empêcher la transmission des données.

Par ailleurs, la fiabilité (ou « reliability ») d'une interface de communication dépend également de son type. Cette fiabilité, qui peut être définie par des niveaux, est inconnue du terminal émetteur. Seul l'équipement de communication intermédiaire (routeur ou commutateur), qui est placé juste avant le terminal destinataire et qui le lie au réseau, connaît le niveau de fiabilité de son interface de communication. Par conséquent, lorsque des paquets sont destinés à un terminal destinataire c'est l'équipement de communication intermédiaire qui le précède qui doit adapter certains paramètres de gestion de certaines de ses piles de protocoles afin d'adapter les paquets reçus à l'interface de communication du terminal destinataire auquel il est raccordé. Ce type de traitement enfreint le principe de transmission de bout-en-bout (ou « end-to-end »). De plus, cela complexifie et accroît la tâche de l'équipement de communication intermédiaire et nécessite la mobilisation de nombreuses ressources internes.

L'invention a donc pour but d'améliorer la situation.

Elle propose à cet effet un procédé de traitement d'adresses de terminaux de communication consistant à intégrer (ou encoder) dans l'adresse d'un terminal au moins une caractéristique de l'interface de communication qui le lie à un équipement de communication intermédiaire.

Ainsi, chaque terminal (source) souhaitant joindre un terminal (destinataire) disposant d'une telle adresse peut obtenir grâce à cette adresse des données d'information représentatives d'au moins une caractéristique de l'interface de communication du terminal destinataire d'un paquet de données à transmettre, puis configurer en conséquence ses paramètres de transmission avant de lui transmettre le paquet de données.

Préférentiellement, l'encodage s'effectue par une subdivision du champ d'adresse en sous-champs destinés chacun à recevoir des informations d'adresse de terminal ou une caractéristique d'interface de communication.

Tout type de caractéristique peut être encodé dans l'adresse et notamment l'unité de transmission maximum (MTU) qui définit la taille de paquet maximale supportée par l'interface de communication, et le niveau de fiabilité de l'interface de communication.

Ainsi, lorsqu'un terminal source souhaite transmettre un paquet de données à un terminal destinataire, désigné par une adresse intégrant des données d'information, on détermine dans cette adresse les données d'information qui représentent au moins une caractéristique de son interface de communication, puis on configure les paramètres de transmission du terminal source en fonction des données d'information déterminées.

Préférentiellement, la détermination s'effectue dans le terminal source souhaitant transmettre un paquet de données à un terminal destinataire.

Par exemple, on obtient grâce à l'adresse du terminal destinataire des données d'information représentatives du niveau de fiabilité de l'interface de communication du terminal destinataire. Dans ce cas, le terminal source qui veut émettre un paquet de données à destination du terminal destinataire, configure des paramètres de gestion de temporisation de protocoles de la pile de protocoles appartenant à la couche de niveau trois (ou couche réseau (« network layer »)) selon le modèle en couches OSI (pour « Open System Interconnexion »), en fonction du niveau de fiabilité codé dans l'adresse de destination contenue dans l'adresse du paquet à transmettre.

En variante ou en complément, on peut obtenir à partir de l'adresse du terminal destinataire des données d'information représentatives de l'unité de transmission maximum (MTU) supportée par son interface de communication. Dans ce cas, on peut ajuster dans le terminal source la taille du paquet à transmettre en fonction de l'unité de transmission maximum (MTU) contenue dans l'entête des paquets de données qu'il souhaite transmettre au terminal destinataire.

L'invention porte en outre sur un dispositif de traitement d'adresse pour un terminal de communication d'un réseau de communications à commutation de paquet et à protocole sans connexion.

Ce dispositif se caractérise par le fait qu'il comprend des moyens de traitement chargés, lorsque leur terminal source doit transmettre un paquet de données à un terminal destinataire désigné par une adresse contenant des données d'information représentatives d'au moins une caractéristique de son interface de communication, de déterminer ces données d'information, puis d'adapter les paramètres de communication de leur terminal source en fonction des données d'information déterminées.

Par exemple, les moyens de traitement peuvent être agencés de manière à décoder dans le champ d'adresse du terminal destinataire des données d'information représentatives du niveau de fiabilité de son interface de communication. Dans ce cas, le module de traitement du dispositif peut comprendre des moyens de configuration agencés de manière à configurer dans son terminal source des paramètres de gestion de temporisation de protocoles, de la pile de protocoles appartenant à la couche de niveau trois selon le modèle OSI, en fonction du niveau de fiabilité contenu dans l'adresse du paquet à transmettre.

En variante ou en complément, les moyens de traitement peuvent être agencés, d'une part, de manière à décoder dans le champ d'adresse du terminal destinataire des données d'information représentatives de l'unité de transmission maximum (MTU) supportée par son interface de communication, et d'autre part, de manière à ajuster la taille du paquet de données à transmettre en fonction de l'unité de transmission maximum (MTU).

Par ailleurs, le dispositif D peut être couplé à une mémoire, implantée dans son terminal source, et dans laquelle sont stockées des données de configuration en correspondance des adresses de terminaux destinataires (qui contiennent sous forme codée leurs données d'informations). Dans ce cas, ses moyens de traitement sont agencés pour extraire de la mémoire les données de configuration qui correspondent à l'adresse du terminal destinataire du paquet de données à transmettre.

L'invention propose également un terminal de communication équipé d'un dispositif de traitement du type de celui présenté ci-avant, avec ou sans mémoire établissant la correspondance entre des adresses de terminaux destinataires et des données de configuration.

L'invention est particulièrement bien adaptée, bien que de façon non exclusive, aux réseaux de communication à protocole Internet (IP), notamment ceux de type IPv6. Dans ce cas particulier, on peut par exemple utiliser seize bits du champ d'adresse pour incorporer les données d'information, dix bits du champ d'adresse étant par exemple destinés aux données d'information représentatives de l'unité de transmission maximum (MTU) et six bits dudit champ d'adresse étant par exemple destinés à l'incorporation de données d'information représentatives du niveau de fiabilité.

D'autres caractéristiques et avantages de l'invention apparaîtront à l'examen de la description détaillée ci-après, et des dessins annexés, sur lesquels:
- la figure 1 illustre de façon schématique un exemple de réseau IP comprenant des terminaux de communication munis d'un dispositif selon l'invention, et
- la figure 2 illustre de façon schématique un exemple d'entête de paquet de données selon l'invention.

Les dessins annexés pourront non seulement servir à compléter l'invention, mais aussi contribuer à sa définition, le cas échéant.

L'invention a pour objet de permettre la prise en compte de caractéristique(s) d'interface de communication de terminaux de communication destinataires au sein d'un réseau de communications à commutation de paquet et à protocole sans connexion, par exemple de type Internet (IP).

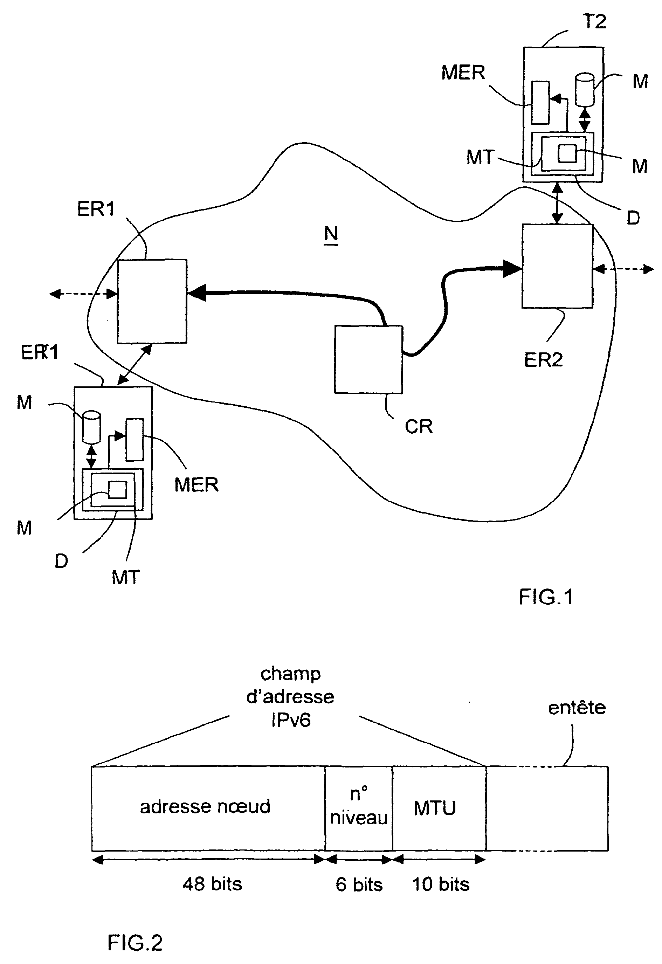

Comme cela est illustré sur la figure 1, un réseau de communications N à protocole Internet (IP) comporte schématiquement une multiplicité d'équipements de communication (ou « hosts ») CR et ERi (ici i = 1, 2, mais il peut prendre n'importe quelle valeur), constituant chacun un noeud de routage ou de commutation chargé d'acheminer des paquets de données vers le terminal de communication Tj qui en est le destinataire final, via une interface air ou filaire. Ici l'indice j est égal à 1 ou 2, mais il peut prendre n'importe quelle valeur supérieure ou égale à 2.

Un équipement de communication peut être par exemple un routeur périphérique ou de bordure (« edge router ») ERi, placé à la frontière du réseau N et permettent l'établissement de liens avec d'autres réseaux et/ou des terminaux de communication Tj. Mais, un équipement de réseau peut être également un routeur de coeur (ou « core router ») CR.

On entend ici par « terminal de communication », un matériel, fixe ou mobile, pouvant échanger des données avec le réseau N, comme par exemple un téléphone, un ordinateur ou un serveur.

Comme indiqué ci-dessus, chaque terminal de communication Tj, ci-après appelé terminal Tj, est raccordé à au moins une interface de communication présentant des caractéristiques connues, fonction de son type, et qui le lie à un équipement de communication tel qu'un routeur ERi.

Parmi ces caractéristiques d'interface, on peut notamment citer la taille des paquets de données que peut accepter l'interface de communication, qui est définie par un paramètre appelé « unité de transmission maximum » (ou MTU pour « Maximum Transmission Unit »), et la fiabilité (ou « reliability ») de l'interface de communication, qui peut être définie par des niveaux, ou des taux de fiabilité.

Selon l'invention, on associe à chaque adresse de terminal Tj du réseau N des données d'information représentatives de l'une au moins des caractéristiques de son interface de communication. Préférentiellement, on associe à chaque adresse de terminal Tj le niveau de fiabilité et la taille de paquet maximale (MTU) supportée par son interface de communication. La ou les données d'information sont intégrées (ou codées) dans l'adresse du terminal Tj, selon, par exemple, la méthode explicitée ci-après.

Préférentiellement, l'adresse qui est intégrée par un terminal source Tj (par exemple T1) dans le champ d'adresse de l'entête d'un paquet de données à transmettre à un terminal destinataire Tj' (par exemple T2), est subdivisée en sous-parties contenant des données définissant les adresses des équipements de communication ERi (ou noeuds) permettant d'accéder au terminal destinataire T2, également appelée adresse destinataire, ou des données d'information représentatives d'une caractéristique de l'interface de communication dudit terminal destinataire T2.

Cela est notamment possible dans les réseaux à commutation de paquet et sans connexion utilisant le protocole IPv6. En effet, dans ce type de réseau, le champ de l'entête, réservé à l'adresse lPv6 du terminal destinataire T2, comporte 64 bits qui peuvent par exemple être répartis comme suit : 48 bits réservés aux adresses de noeud et 16 bits réservés aux données d'information.

Par exemple, on peut réserver 10 des 16 bits aux données d'information représentatives de l'unité de transmission maximum (MTU) et les 6 bits restant aux données d'information représentatives du niveau de fiabilité (n°niveau).

En d'autres termes, comme illustré sur la figure 2, on subdivise le champ d'adresse destinataire en trois sous-champs, le premier réservé à l'adresse destinataire, le deuxième réservé à la MTU et le troisième réservé à la fiabilité.

Bien entendu, on peut envisager des variantes dans lesquelles on n'incorpore dans l'adresse du terminal destinataire T2 que la taille MTU ou que le niveau de fiabilité. Dans le premier cas, le champ d'adresse destinataire ne comporte plus que deux sous-champs, l'un de 54 bits réservé à l'adresse destinataire, l'autre de 10 bits réservé à la taille MTU, par exemple. Dans le second cas, le champ d'adresse destinataire comporte également deux sous-champs, l'un de 58 bits réservé à l'adresse destinataire, l'autre de 6 bits réservé au niveau de fiabilité, par exemple.

Grâce à l'invention, le terminal source T1 connaît désormais certaines caractéristiques de l'interface de communication du terminal destinataire T2, de sorte qu'il peut se configurer en conséquence.

Par exemple, lorsque certaines données d'information, codées dans l'adresse du terminal destinataire T2, sont représentatives du niveau de fiabilité, le terminal source T1 peut se configurer de manière à adapter l'une au moins de ses piles de protocoles, et donc les paquets à transmettre, audit niveau de fiabilité de l'interface de communication du terminal destinataire T2. Cela permet d'éviter à l'équipement de communication (intermédiaire) ER2 du réseau N qui précède le terminal destinataire T2 de devoir adapter le paquet en conséquence. De plus, cela permet de respecter le principe de transmission de bout-en-bout.

Préférentiellement, chaque terminal Tj du réseau N est agencé de manière à constituer son adresse de communication, contenant ses propres données d'information, qu'il peut ensuite transmettre aux autres terminaux et équipements du réseau. Bien entendu, l'adresse de communication demeure au format standard, de sorte que sa transmission s'effectue de façon classique.

Mais en variante, les adresses codées peuvent être générées par un terminal de service du réseau et communiquées aux différents terminaux.

Par ailleurs, chaque terminal de communication Tj du réseau N est préférentiellement équipé d'un module d'émission/réception MER et d'un dispositif de traitement D.

Ce dispositif D comprend un module de traitement MT chargé, lorsque le terminal Tj qu'il équipe (par exemple T1) doit transmettre des données à un terminal destinataire (par exemple T2), de configurer certains de ses paramètres de transmission en fonction d'une ou plusieurs caractéristiques de l'interface de communication de ce terminal destinataire T2.

Pour ce faire, lorsque des données doivent être transmises au terminal destinataire T2 désigné par son adresse, le module de traitement MT peut procéder de deux façons selon que son dispositif D est couplé ou non à une mémoire M dans laquelle est stockée une table contenant les adresses d'autres terminaux du réseau qu'il peut joindre, directement ou indirectement. Ces adresses de terminaux comportent les données d'information représentatives des caractéristiques de leurs interfaces de communication respectives, stockées en correspondance de données de configuration.

En l'absence de la mémoire M, le module de traitement MT est agencé pour décoder les données d'information contenues dans l'adresse du terminal destinataire T2, et en déduire les données de configuration correspondantes. En présence de la mémoire M et donc de données de configuration, le module de traitement MT accède à la mémoire M pour déterminer les données de configuration qui correspondent à l'adresse du terminal destinataire T2.

Préférentiellement, le module de traitement MT du dispositif D comporte un module de configuration MC agencé de manière à configurer certains paramètres de gestion de la pile de protocoles appartenant à la couche de niveau trois (ou couche réseau (« network layer »)) selon le modèle en couches OSI (pour « Open System Interconnexion »), en fonction du niveau de fiabilité contenu dans (ou désigné par) l'adresse du terminal destinataire T2, désigné dans l'entête du paquet à transmettre.

Plus préférentiellement encore, le module de configuration MC est chargé de configurer certains paramètres de gestion de temporisation de certains protocoles (comme par exemple les protocoles TCP) de la pile de protocoles des couches de niveau deux et plus.

D'une façon plus générale, le module de configuration MC peut adapter les caractéristiques d'émission de niveau deux (2), par exemple afin d'adapter le taux de transmission (dans le cas d'un lien radio), ou de niveau trois (3), par exemple les timers des protocoles IP, ou encore de niveaux supérieurs au niveau 3, par exemple afin d'adapter le Codec en fonction de l'interface (dans le cas du protocole RTP).

Dans une variante dans laquelle le dispositif D ne comporte pas de module de configuration, c'est le module de traitement MT qui est chargé de la configuration, notamment en fonction du niveau de fiabilité contenu (ou codé) dans l'adresse de l'équipement destinataire du paquet à transmettre.

Le dispositif de traitement D selon l'invention, et notamment son module de traitement PM, son module de configuration MC et la mémoire M, peuvent être réalisés sous la forme de circuits électroniques, de modules logiciels (ou informatiques), ou d'une combinaison de circuits et de logiciels.

L'invention offre également un procédé de traitement d'adresses de terminaux de communication Tj d'un réseau de communications N à commutation de paquet et à protocole sans connexion (par exemple à protocole Internet IP)).

Celui-ci peut être notamment mis en oeuvre à l'aide du dispositif de traitement D et de l'un au moins des terminaux de communication Tj présentés ci-avant. Les fonctions et sous-fonctions principales et optionnelles assurées par les étapes de ce procédé étant sensiblement identiques à celles assurées par les différents moyens constituant le dispositif de traitement D et/ou les terminaux de communication Tj, seules seront résumées ci-après les étapes mettant en oeuvre les fonctions principales du procédé selon l'invention.

Ce procédé consiste à intégrer (ou encoder) dans l'adresse d'un terminal Tj au moins une caractéristique de l'interface de communication qui le lie à un équipement de communication intermédiaire ERi.

On peut ainsi obtenir pour chaque terminal source, grâce à l'adresse du terminal destinataire, des données d'information représentatives d'au moins une caractéristique de l'interface de communication de ce terminal destinataire, puis configurer en conséquence les paramètres de transmission du terminal source souhaitant transmettre des paquets de données au terminal destinataire.

L'invention ne se limite pas aux modes de réalisation de dispositif de traitement, de terminal de communication et de procédé de traitement d'adresses décrits ci-avant, seulement à titre d'exemple, mais elle englobe toutes les variantes que pourra envisager l'homme de l'art dans le cadre des revendications ci-après.

## Revendications

1. Procédé de traitement d'adresses de terminaux de communication (Tj) d'un réseau de communications (N) à commutation de paquet et à protocole sans connexion, **caractérisé en ce qu'**il consiste à intégrer dans une adresse d'un terminal de communication (Tj) des données d'information représentatives d'au moins une caractéristique d'une interface de communication qui le lie audit réseau (N).

2. Procédé selon la revendication 1, **caractérisé en ce que** l'on subdivise le champ d'adresse destinataire en sous-champs destinés chacun à recevoir des informations d'adresse de terminal ou une caractéristique d'interface de communication.

3. Procédé selon l'une des revendications 1 et 2, **caractérisé en ce que** chaque caractéristique d'interface de communication est choisie dans un groupe comprenant au moins une unité de transmission maximum (MTU), définissant la taille maximale du paquet supportée par l'interface de communication, et le niveau de fiabilité de l'interface de communication.

4. Procédé selon l'une des revendications 1 à 3, **caractérisé en ce qu'**en cas de demande de transmission d'un paquet de données à un terminal de communication destinataire (T2), désigné par une adresse intégrant lesdites données d'information, on détermine dans ladite adresse lesdites données d'information représentatives d'au moins une caractéristique de l'interface de communication dudit terminal destinataire (T2), puis on configure des paramètres de transmission du terminal de communication (T1) souhaitant transmettre des paquets de données au terminal de communication destinataire (T2), en fonction desdites données d'information déterminées.

5. Procédé selon la revendication 4, **caractérisé en ce que** ladite détermination est effectuée dans chaque terminal de communication (T1) dudit réseau (N), chargé de la transmission dudit paquet.

6. Procédé selon la revendication 5, **caractérisé en ce que** ladite adresse comporte des données d'information représentatives du niveau de fiabilité de l'interface de communication du terminal destinataire (T2), et **en ce que** l'on configure dans ledit terminal de communication (T1), devant transmettre ledit paquet de données, des paramètres de gestion de temporisation de protocoles, d'une pile de protocole appartenant à une couche de niveau trois selon le modèle OSI, en fonction du niveau de fiabilité contenu dans l'adresse de destination dudit paquet à transmettre.

7. Procédé selon l'une des revendications 5 et 6, **caractérisé en ce que** ladite adresse comporte des données d'information représentatives de l'unité de transmission maximum supportée par l'interface de communication, et **en ce que** l'on ajuste dans ledit terminal de communication (T1), devant transmettre ledit paquet de données, la taille dudit paquet à transmettre en fonction de l'unité de transmission maximum (MTU) contenue dans l'adresse de destination dudit paquet à transmettre.

8. Dispositif (D) de traitement d'adresse pour un terminal de communication (Tj) d'un réseau de communications (N) à commutation de paquet et à protocole sans connexion, **caractérisé en ce qu'**il comprend des moyens de traitement (MT) agencés, en présence d'une adresse, d'un terminal de communication (T2) du réseau (N) destinataire d'un paquet de données à transmettre, contenant des données d'information représentatives d'au moins une caractéristique de son interface de communication, pour déterminer lesdites données d'information, puis pour adapter les paramètres de communication du terminal de communication (T1) qu'ils équipent, et qui souhaite transmettre des données audit terminal destinataire (T2), en fonction desdites données d'information déterminées.

9. Dispositif selon la revendication 8, **caractérisé en ce que** chaque caractéristique d'interface de communication est choisie dans un groupe comprenant au moins une unité de transmission maximum (MTU), définissant la taille maximale du paquet supportée par l'interface de communication, et le niveau de fiabilité de l'interface de communication.

10. Dispositif selon la revendication 9, **caractérisé en ce que** lesdits moyens de traitement (MT) sont agencés pour déterminer dans ladite adresse des données d'information représentatives du niveau de fiabilité de l'interface de communication, et pour configurer dans ledit terminal de communication (T1), devant transmettre ledit paquet de données, des paramètres de gestion de temporisation de protocoles, d'une pile de protocole appartenant à une couche de niveau trois selon le modèle OSI, en fonction du niveau de fiabilité contenu dans ladite adresse dudit paquet à transmettre.

11. Dispositif selon l'une des revendications 9 et 10, **caractérisé en ce que** lesdits moyens de traitement (MT) sont agencés, d'une part, pour déterminer dans ladite adresse des données d'information représentatives de l'unité de transmission maximum (MTU) supportée par l'interface de communication, et d'autre part, pour ajuster la taille dudit paquet de données à transmettre en fonction de l'unité de transmission maximum (MTU) contenue dans son entête.

12. Dispositif selon l'une des revendications 8 et 9, **caractérisé en ce qu'**il est couplé à une mémoire (M) implantée dans ledit terminal de communication (T1), devant transmettre ledit paquet de données, et dans laquelle sont stockées des données de configuration des paramètres de communication dudit terminal de communication (T1) en correspondance desdites adresses de terminaux de communication destinataires (T2), et **en ce que** lesdits moyens de traitement (MT) sont agencés pour extraire de ladite mémoire (M) les données de configuration stockées en correspondance de l'adresse du terminal de communication (T2) destinataire dudit paquet de données à transmettre, de manière à configurer les paramètres de communication dudit terminal de communication (T1) en conséquence.

13. Terminal de communication (Tj) pour un réseau de communications (N) à commutation de paquet et à protocole sans connexion, **caractérisé en ce qu'**il comprend un dispositif de traitement (D) selon l'une des revendications 8 à 12.

14. Utilisation du dispositif de traitement (D) selon l'une des revendication 8 à 12, conformément au procédé selon l'une des revendications 1 à 7, dans les réseaux de communication à protocole Internet (IP)

15. Utilisation selon la revendication 14, **caractérisée en ce que** le réseau de communication à protocole Internet est de type IPv6.

16. Utilisation selon la revendication 15, **caractérisée en ce que** seize bits de l'adresse sont destinés à l'incorporation desdites données d'information.

17. Utilisation selon la revendication 16, **caractérisée en ce que** dix bits de l'adresse sont destinés à l'incorporation de données d'information représentatives de l'unité de transmission maximum (MTU).

18. Utilisation selon l'une des revendications 16 et 17, **caractérisée en ce que** six bits de l'adresse sont destinés à l'incorporation de données d'information représentatives du niveau de fiabilité.

## Patentansprüche

1. Verfahren zur Verarbeitung der Adressen von Kommunikationsendgerären (Tj) eines Kommunikationsnetzwerks (N) mit Paketvermittlung und verbindunglosem Protokoll, **dadurch gekennzeichnet, dass** es darin besteht, in die Adresse eines Kommunikationsendgerätes (Tj) Informationsdaten zu integrieren, die für mindestens ein Merkmal einer Kommunikationsschnittstelle, die es mit dem genannten Netz (N) verbindet, repräsentativ sind.

2. Verfahren gemäß Anspruch 1, **dadurch gekennzeichnet, dass** das Empfänger-Adressfeld in Unterfelder aufgeteilt wird, in die jeweils die Adressinformationen des Endgeräts oder ein Merkmal der Kommunikationsschnittstelle eingetragen werden.

3. Verfahren gemäß einem der Ansprüche 1 und 2, **dadurch gekennzeichnet, dass** jedes Kommunikationsschnittstellen-Merkmal aus einer Gruppe ausgewählt wird, die mindestens aus der größten Übertragungseinheit (MTU), durch die die maximale Größe eines Pakets definiert wird, die von der Kommunikationsschnittstelle unterstützt wird, und aus der Zuverlässigkeitsstufe der Kommunikationsschnittstelle besteht.

4. Verfahren gemäß einem der Ansprüche 1 bis 3, **dadurch gekennzeichnet, dass** im Fall einer Übertragung von Datenpaketen an ein Empfänger-Kommunikationsendgerät (T2), das durch eine Adresse **gekennzeichnet** ist, die die genannten Informationsdaten enthält, in der genannten Adresse die genannten Informationsdaten ermittelt werden, die für mindestens ein Merkmal der Kommunikationsschnittstelle des genannten Empfängerendgeräts (T2) repräsentativ sind, und anschließend die Öbertragungsparameter des Kommunikationsendgeräts (T1), das Datenpakete an das Empfänger-Kommunikationsendgerät (T2) übermitteln will, in Abhängigkeit von den genannten, ermittelten Informationsdaten konfiguriert werden.

5. Verfahren gemäß Anspruch 4, **dadurch gekennzeichnet, dass** die genannte Ermittlung in jedem Kommunikationsendgerät (T1) des genannten Netwerks (N) durchgeführt wird, das mit der Übertragung des genannten Pakets beauftragt ist.

6. Verfahren gemäß Anspruch 5, **dadurch gekennzeichnet, dass** die genannte Adresse Informationsdaten enthält, die für die Zuverlässigkeitsstufe der Kommunikationsschnittstelle des Empfängerendgeräts (T2) repräsentativ sind, sowie **dadurch**, dass in dem genannten Kommunikationsendgerät (T1), das das genannte Datenpaket übertragen muss, Verwaltungsparameter für die Verzögerung der Protokolle eines Protokollstapels, der zur Vermittlungsschicht-Stufe 3 entsprechend dem OSI-Modell gehört, in Abhängigkeit von der Zuverlässigkeitsstufe, die in der Empfängeradresse des genannten, zu übertragenden Pakets enthalten ist, konfiguriert; werden.

7. Verfahren gemäß einem der Ansprüche 5 und 6, **dadurch gekennzeichnet, dass** die genannte Adresse Informationsdaten enthält, die für die größte Übertragungseinheit, die von der Kömmunikationsschnittstelle unterstützt wird, repräsentativ sind, sowie **dadurch**, dass die Größe des zu übertragenden Datenpakets im Kommunikationsendgerät (T1), das das genannte Datenpaket übertragen muss, in Abhängigkeit von der größten Ubertragungseinheit (MTU), die in der Empfängeradresse des genannten, zu übertragenden Pakets enthalten ist, angepasst wird.

8. Vorrichtung (D) zur Adressverarbeitung für ein Kommunikationsendgerät (Tj) eines Kommunikationsnetzwerks (N) mit Paketvermittlung und verbindungslosem Protokoll, **dadurch gekennzeichnet, dass** es Verarbeitungseinrichtungen (MT) umfasst, die entsprechend aufgebaut sind, um in Anwesenheit der Adresse eines Kommunikationsendgeräts (T2) des Empfängernetzwerks (N) eines zu übertragenden Datenpakets, das Informationsdaten enthält, die für mindestens ein Merkmal seiner Kommunikationsschnittstelle repräsentativ sind, die genannten Informationsdaten zu ermitteln und die Kommunikationsparameter des Kommunikationsendgerätes (T1), in dem sie enthalten sind und das die Daten an das genannte Empfängerendgerät (T2) übermitteln will, in Abhängigkeit von den genannten, ermittelten Informationsdaten anzupassen.

9. Vorrichtung gemäß Anspruch 8, **dadurch gekennzeichnet, dass** jedes Merkmal der Kommunikationsschnittstelle aus einer Gruppe ausgewählt wird, die zumindest die größte Übertragungseinheit (MTU), die die maximale. Paketgröße definiert, die von der Kommunikationsschnittstelle unterstützt wird, und die Zuverlässigkeitsstufe der Kommunikationsschnittstelle umfasst.

10. Vorrichtung gemäß Anspruch 9, **dadurch gekennzeichnet, dass** die genannten Verarbeitungseinrichtungen (MT) entsprechend aufgebaut sind, um in der genannten Adresse die Informationsdaten zu ermitteln, die für die Zuverlässigkeitsstufe der Kommunikationsschnittstelle repräsentativ sind, und in dem genannten Kommunikationsendgerät (T1), das das genannte Datenpaket übermitteln muss, die Verwaltungsparameter für die Verzögerung der Protokolle eines Protokollstapels, der zur Vermittlungsschicht-Stufe 3 entsprechend dem OSI-Modell 1 gehört, in Abhängigkeit von der Zuverlässigkeitsstufe, die in der genannten Adresse des genannten zu übertragenden Pakets enthalten ist, zu konfigurieren.

11. Vorrichtung gemäß einem der Ansprüche 9 und 10, **dadurch gekennzeichnet, dass** die genannten Verarbeitungseinrichtungen (MT) entsprechend aufgebaut sind, um einerseits in der genannten Adresse die Informationsdaten zu ermitteln, die für die größte Übertragungseinheit (MTU) repräsentativ sind, die von der Kommunikationsschnittstelle unterstützt wird, und andererseits um die Größe des genannten, zu übertragenden Datenpakets in Abhängigkeit von der größten Übertragungseinheit (MTU), die in seinem Header enthalten ist, anzupassen.

12. Vorrichtung gemäß einem der Ansprüche 8 und 9, **dadurch gekennzeichnet, dass** sie mit einem Speicher (M) gekoppelt ist, der in das genannte Kommunikationsendgerät (T1) integriert ist, das das genannte Datenpaket übertragen muss, und in dem die Konfigurationsdaten für die Konfigurationsparameter des genannten Kommunikationsendgeräts (T1) in Übereinstimmung mit den genannten Adressen der Empfänger-Kommunikationsendgeräte (T2) gespeichert sind, sowie **dadurch**, dass die genannten Verarbeitungseinrichtungen (MT) entsprechend aufgebaut sind, um aus dem genannten Speicher (M) die Konfigurationsdaten auszulesen, die entsprechend der Adresse des Kommunikationsendgeräts (T2), das Empfänger des genannten, zu übertragenden Datenpakets ist, gespeichert sind, um die Kommunikationsparameter des genannten Kommunikationsendgeräts (T1) entsprechend zu konfigurieren.

13. Kommunikationsendgerät (Tj) für ein Kommunikationsnetz (N) mit Paketvermittlung und verbindungslosem Protokoll, **dadurch gekennzeichnet dass** es eine Verarbeitungseinrichtung (D) gemäß einem der Ansprüche 8 bis 12 umfasst.

14. Anwendung der Verarbeitungsvorrichtung (D) gemäß einem der Ansprüche 8 bis 12 entsprechend dem Verfahren gemäß einem der Ansprüche 1 bis 7 in Kommunikationsnetzwerken mit Internet-Protokoll (IP).

15. Anwendung gemäß Anspruch 14, **dadurch gekennzeichnet, dass** es sich bei dem Kommunikationsnetzwerk mit Internet-Protokol um den Typ IPv6 handelt.

16. Anwendung gemäß Anspruch 15, **dadurch gekennzeichnet, dass** sechzehn Bit der Adresse für die Integration der genannten Informationsdaten vorgesehen sind.

17. Anwendung gemäß Anspruch 16, **dadurch gekennzeichnet, dass** zehn Bit der Adresse für die Integration von Informationsdaten vorgesehen sind, die für die größte Übertragungseinheit (MTU) repräsentativ sind.

18. Anwendung gemäß einem der Ansprüche 16 und 17, **dadurch gekennzeichnet, dass** sechs Bit der Adresse für die Integration der Informationsdaten vorgesehen sind, die für die Zuverlässigkeitsstufe repräsentativ sind.

## Claims

1. Method of processing addresses of communcation terminals (Tj) of a pocket-switched communication network (N) using a connectionless protocol, **characterised in that** it consists in integrating into on address of a communicotton terminal (Tj) information data representing at least one characteristic of a communication interface that connects it to said network (N).

2. Method according to claim 1, **characterised in that** the destination address field is divided into sub-fields each intended to receive terminal address information or a communication interface characteristic.

3. Method according to either claim 1 or claim 2, **characterised in that** each communication interface characteristic is selected from a group comprising at least a maximum transmission unit (MTU) defining the maximum packet size supported by the communication interface and the reliability level of the communication interface.

4. Method according to any one of claims 1 to 3, **characterised in that**, in the event of a request to transmit a data packet to a destination communication terminal (T2) designated by an address integrating said information data, said information data representing at least one characteristic of the communication interface of said destination terminal (T2) is determined from said address, after which transmission parameters of the communication terminal (T1) seeking to transmit data packets to the destination communication terminal (T2) are configured as a function of said information data that has been determined.

5. Method according to claim 4, **characterised in that** said determination is effected in each communication terminal (T1) of said network (N) responsible for transmitting said pocket.

6. Method according to claim 5, **characterised in that** said address includes information data representing the reliability level of the communication interface of the destination terminal (T2) and protocol time management parameters of a protocol stack belonging to a level three layer of the OSI model are configured in said communication terminal (T1) having to transmit said data packet as a function of the reliability level contained in the destination address of said packet to be transmitted.

7. Method according to either claim 5 or claim 6, **characterised in that** said address includes information data representing the maximum transmission unit supported by the communication interface and the size of sold packet to be transmitted is adjusted in said communication terminal (T1) having to transmit said data packet as o function of the maximum transmission unit (MTU) contained in the destination address of said packet to be transmitted.

8. Address processing device (D) for o communication terminal (Tj) of a packet-switched communication network (N) using a connectionless protocol, **characterised in that** it comprises processing means (MT) adopted, in the presence of an address of a communication terminal (T2) of the network (N) that is the destination of a data packet to be transmitted containing information data representing at least one characteristic of its communication interface, to determine said information data and then to adapt the communication parameters of the communication terminal (T1) that they equip and which is seeking to transmit data to said destination terminal (T2) as a function of said information data that has been determined.

9. Device according to claim 8, **characterised in that** each communication interface characteristic is selected from a group comprising at least a maximum transmission unit (MTU) defining the maximum packet size supported by the communication interface and the reliability level of the communication interface.

10. Device according to claim 9, **characterised in that** said processing means (MT) are adapted to determine in said address information data representing the reliability level of the communication interface and to configure protocol time management parameters of a protocol stock belonging to a level three layer of the OSI model in said communication terminal (T1) having to transmit said data packet as a function of the reliability level contained in said address of said packet to be transmitted.

11. Device according to either claim 9 or claim 10, **characterised in that** said processing means (MT), firstly, determine in said address information data representing the maximum transmission unit (MTU) supported by the communication interface and, secondly, adjust the size of said data packet to be transmitted as a function of the maximum transmission unit (MTU) contained in its header.

12. Device according to either claim 8 or claim 9, **characterised in that** it is connected to a memory (M) installed in said communication terminal (T1) having to transmit said data packet and in which configuration data of the communication parameters of said communication terminal (T1) is stored in corresponding relationship to said addresses of destination communication terminals (T2) and said processing means (MT) extract from said memory (M) the configuration data stored in corresponding relationship to the address of the communication terminal (T2) that is the destination of said data pocket to be transmitted so as to configure the communication parameters of send communication terminal (Tj) accordingly.

13. Communication terminal (Tj) for a pocket-switched communication network (N) using a connectionless protocol, **characterised in that** it comprises a processing device (D) according to any one of claims 8 to 12.

14. Use of the processing device (D) according to any of claims 8 to 12, in accordance with the method according to any of claims 1 to 7, in Internet protocol (IP) communication networks.

15. Use according to claim 14, **characterised in that** the Internet protocol communication network is of the IPv6 type.

16. Use according to claim 15, **characterised in that** 16 bits of the address are intended to incorporate said information data.

17. Use according to claim 16, **characterised in that** 10 bits of the address are intended to incorporate information data representing the maximum transmission unit (MTU).

18. Use according to either claim 16 or claim 17, **characterised in that** six bits of the address are intended to incorporate information data representing the reliability level.
